# FASCICULE DE BREVET EUROPEEN

(11) **EP 3 939 425 B1**
(45) Date de publication et mention de la délivrance du brevet: **14.10.2026**
(21) Numéro de dépôt: 21184498.0
(22) Date de dépôt: 08.07.2021
(51) Int. Cl.: A01M 7/00

(54) **RAMPE DE PULVÉRISATION REPLIABLE COMPORTANT UN DISPOSITIF DE VERROUILLAGE ET MACHINE AGRICOLE ÉQUIPÉE D'UNE TELLE RAMPE**
KLAPPBARES SPRITZGESTÄNGE MIT EINER VERRIEGELUNGSVORRICHTUNG UND MIT EINEM SOLCHEN GESTÄNGE AUSGESTATTETE LANDWIRTSCHAFTLICHE MASCHINE
FOLDABLE SPRAY BOOM WITH A LOCKING DEVICE AND AGRICULTURAL MACHINE EQUIPPED WITH SUCH A BOOM

(30) Priorité: 15.07.2020 FR 2007393
(43) Date de publication de la demande: 19.01.2022
(73) Titulaire: Kuhn-Audureau SAS, 85260 La Copechagnière (FR)
(72) Inventeur: GAUTRON, Pascal, 85250 SAINT-FULGENT (FR); DESURIER, Théo, 85000 LA ROCHE-SUR-YON (FR)
(74) Mandataire: Hager, Esther Evelyne

(56) Documents cités:
- EP-A1- 3 456 196
- US-A1- 2006 045 715
- US-B2- 7 431 221

## Description

La présente invention concerne le domaine du machinisme agricole, notamment des appareils ou machines agricoles d'épandage de produit et plus particulièrement des rampes utilisées sur des appareils de pulvérisation. De tels appareils agricoles sont pourvus d'au moins une rampe destinée à épandre, le plus uniformément possible, des engrais ou des produits de traitement du type phytosanitaire sur des cultures ou sur le sol.

La présente invention vise plus spécifiquement une rampe de pulvérisation repliable comportant un dispositif de verrouillage. L'invention concerne également une machine agricole comportant une telle rampe de pulvérisation.

Les appareils d'épandage dans les champs agricoles, tels que les machines pour pulvériser les cultures, utilisent généralement une rampe de pulvérisation. La rampe de pulvérisation est suspendue au-dessus des cultures dans le champ et comprend, entre autres, des buses de pulvérisation et des conduites d'alimentation en produit qui y sont couplées. En raison de la largeur d'une telle rampe, elle est conçue pour être repliable au transport afin de respecter le gabarit routier. Elle comporte ainsi plusieurs éléments articulés et est munie d'un système de repliage, tel que des actionneurs. Typiquement la rampe dispose d'une partie latérale droite et d'une partie latérale gauche chacune articulée sur un cadre central relié au châssis. Les parties latérales (gauche et droite) viennent se positionner le long du tracteur ou de la cuve selon le type de pulvérisateur. Chaque partie latérale est encore divisée en plusieurs bras. Lors des phases de transport, la rampe est maintenue repliée au moyen d'un dispositif de verrouillage. Le dispositif de verrouillage prévient un dépliage par accident durant les phases de transport du pulvérisateur. Les parties latérales s'enfilent par le haut dans un support de rampe lorsqu'elles sont repliées, la rampe repose ainsi dans le support de rampe le long de la cuve.

Un tel support de rampe ne convient pas lorsque les buses de pulvérisation s'étendent sous la structure de la rampe. Pour ce type de rampe, le verrouillage est effectué au moyen d'un support de blocage qui pivote à la fin de la fermeture des parties latérales via un tube de blocage. Ce support de blocage est actionné une fois que la rampe est complètement repliée, il pivote alors vers le bas et bloque les différents bras l'un contre l'autre. Le support de blocage enveloppe les différents bras par le haut et ne donne pas de soutien vertical à la rampe. Pour ne pas endommager le support de rampe et/ou les parties latérales de rampe, ce dispositif de verrouillage doit être actionné à la fin de la fermeture de la partie latérale, il requiert donc l'utilisation de capteurs pour connaître la fin de course. Après réception du signal fin de course, le tube de blocage est actionné et le support de blocage pivote. Une telle solution est donc couteuse, complexe et présente l'inconvénient de ne pas fournir de soutien dans le sens vertical pour la rampe.

Par le document US7431221, on connait un dispositif de verrouillage pour une rampe de pulvérisation dont le déploiement est effectué en plusieurs étapes. Le bras extérieur muni d'un étrier est verrouillé sur le bras intermédiaire muni d'un support de rampe. Lors du repliage du bras extérieur, ce dernier est verrouillé automatiquement dans le support de rampe. Depuis la configuration de transport, la partie latérale gauche pivote vers l'arrière pour ouvrir le bras intérieur puis les bras intermédiaire et extérieur pivotent. Par ce pivotement le verrou biaisé par un ressort s'ouvre au moyen d'un système à câble pour libérer l'étrier et permettre au bras extérieur de s'ouvrir. Le câble exerce un effort linéaire de rétraction sur le verrou et libère ainsi le dispositif de verrouillage lors d'une étape préalable du dépliage de la rampe. Le câble longe le bras intermédiaire pour aller se fixer sur le bras intérieur. Un tel système à câble pourra s'user et s'étirer et ne plus commander l'ouverture du verrou. De plus, un tel dispositif à câble est dépendant d'une cinématique particulière de rampe. Par ailleurs, la direction d'action du verrou présent sur le support de rampe est horizontale, ce qui demande un alignement parfait entre le bras extérieur et le bras intermédiaire. Des opérations régulières de maintenance au niveau du câble et du réglage de l'articulation entre le bras extérieur et le bras intermédiaire sont à prévoir. Par ailleurs, ce système fonctionne à partir d'une rampe dont chaque côté dispose de trois bras puisque c'est le mouvement du bras intermédiaire par rapport au bras intérieur qui permet la mise sous tension du câble et donc le déverrouillage du verrou entre le bras intermédiaire et le bras extérieur.

La présente invention définie par les revendications a pour but de pallier au moins les principaux inconvénients précités. Idéalement, l'invention devra permettre de fournir un dispositif de déverrouillage indépendant, fiable, simple et économique.

A cet effet, une importante caractéristique de l'invention consiste en ce que chaque dispositif de verrouillage comporte un élément d'ouverture intégré pour neutraliser l'action du verrou et l'élément d'ouverture est configuré pour agir dans une direction verticale. Grâce à cette importante caractéristique, l'action nécessaire sur le verrou pour le dépliage de la rampe est réalisé en direct, au niveau du dispositif de verrouillage. L'action directe se fait avantageusement en parallèle de la commande d'ouverture de la rampe. Ce dispositif de verrouillage est transposable à n'importe quelle cinématique de rampe disposant d'au moins deux bras articulés.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une machine agricole du type pulvérisateur avec une rampe repliable dans une configuration de transport,
[Fig. 2] représente une demi-rampe avec plusieurs bras, dont le bras extérieur est en train de s'ouvrir,
[Fig. 3] est une vue en coupe du dispositif de verrouillage dans une position déverrouillée,
Fig. 4] est une vue en coupe du dispositif de verrouillage dans une position verrouillée,
[Fig. 5] illustre le support de rampe solidaire du bras intérieur,
[Fig. 6] illustre l'étrier solidaire du bras extérieur.

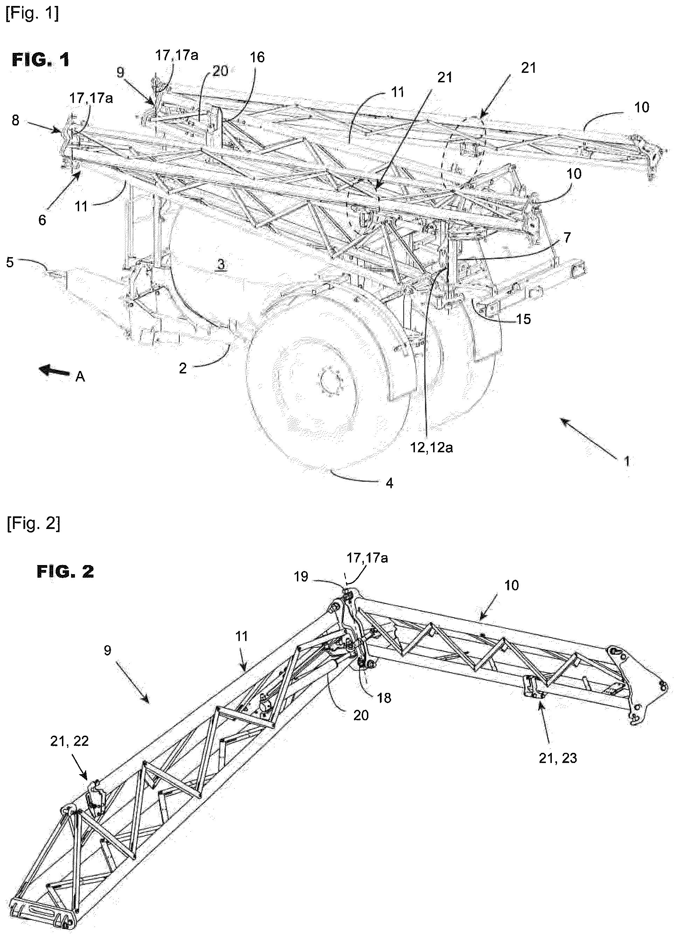

La machine agricole 1 illustrée sur la figure 1 est un pulvérisateur conçu pour l'application de liquide sous forme de gouttes vers une cible déterminée. Cette machine est destinée à épandre sur le sol ou à répartir sur la végétation des produits phytosanitaires qui agissent sur les plantes ou sur les parasites. L'épandage de fertilisants liquides sur les cultures est également possible. Le pulvérisateur comporte un châssis 2 longitudinal et une cuve 3 destinée à contenir les produits de traitement. Dans cet exemple de réalisation, le châssis 2 est muni de roues 4 et d'un timon d'attelage 5. Il s'agit d'un pulvérisateur du type traîné destiné à être attelé à un tracteur (non représenté). La machine agricole 1 peut être déplacée dans une direction d'avance A, de préférence par le tracteur. Dans la suite de la description, les termes ou notions « avant », « arrière », « devant », « derrière » sont défini(e)s par rapport à la direction d'avance A de la machine agricole 1 et les termes ou notions « droite » et « gauche » sont défini(e)s en regardant la machine agricole 1 de derrière et dans la direction d'avance A.

Le pulvérisateur comporte également une rampe 6 de pulvérisation qui soutient des buses (non représentées) qui servent à épandre le produit. La rampe 6 de pulvérisation est constituée par un cadre central 7 et deux parties latérales 8, 9 ou deux demi-rampes reliées de part et d'autre du cadre central 7. Une partie latérale s'étend à gauche et l'autre s'étend à droite du cadre central 7. Les deux parties latérales 8, 9 sont avantageusement symétriques par rapport à un plan vertical médian du châssis 2. Pour augmenter le rendement du pulvérisateur lors du travail, sa rampe peut atteindre plusieurs dizaines de mètres alors que pour une circulation sur les routes et chemins, le pulvérisateur doit respecter un encombrement réduit en largeur. Ainsi la rampe 6 de pulvérisation est conçue pour pouvoir se replier et chaque partie latérale 8, 9 comprend plusieurs bras articulés 10, 11 qui peuvent se replier plusieurs fois le long de la cuve 3 lors du transport. A cet effet, la rampe 6 est munie d'un système de manœuvre manuel ou constitué d'éléments d'actionnement pour replier ou déployer les bras articulés 10, 11.

Une telle machine agricole 1 dispose de moyens pour prélever le produit à épandre contenu dans la cuve 3 et de l'envoyer sous pression jusqu'à des buses. Les buses et l'ensemble des tuyaux (non représenté) dans lesquels circulent le produit à épandre sont soutenus par la rampe 6 de pulvérisation. D'une manière avantageuse, la rampe 6 est solidaire du châssis 2 au moyen d'un cadre central 7. Plus précisément, c'est le cadre central 7 de la rampe 6 qui est relié au châssis 2. Le cadre central 7 permet de régler la hauteur de pulvérisation de la rampe 6 par rapport au sol au moyen d'une tringlerie de réglage en hauteur.

Typiquement afin de diminuer l'encombrement général de la machine agricole 1, en dehors des périodes de travail, les bras articulés 10, 11 sont repliés les uns sur les autres et sont ramenés le long de la machine. Les parties latérales 8, 9 sont constituées de plusieurs bras 10, 11 reliés entre eux au moyen d'articulations d'axe sensiblement vertical de sorte qu'elles puissent être repliées en position de transport. Dans l'exemple de réalisation représenté, la rampe 6 de pulvérisation comporte de chaque côté un bras extérieur 10 et un bras intérieur 11. Chaque partie latérale 8, 9 comporte donc un bras intérieur 11 solidaire du cadre central 7 par l'intermédiaire d'une articulation intérieure 12 d'axe 12a. Cette articulation intérieure 12 est une combinaison d'une liaison inférieure 13 et d'une liaison supérieure 14. Les parties latérales 8, 9 peuvent être repliées et déployées autour de l'axe 12a respectif passant par la liaison inférieure 13 et la liaison supérieure 14 par l'intermédiaire d'un actionneur intérieur 15 respectif. L'actionneur intérieur 15 est disposé entre le cadre central 7 et le bras intérieur 11 de la partie latérale respective 8, 9. D'une manière avantageuse, la liaison supérieure 14 comprend un moyen d'inclinaison, de préférence sous la forme d'une entretoise réglable, pour régler l'inclinaison de la partie latérale 8, 9 de la rampe 6 de pulvérisation par rapport au sol.

La figure 1 illustre le pulvérisateur dans une configuration de transport. Sur cette figure la partie latérale gauche 8 de la rampe 6 est représentée dans une position repliée. Les deux bras 10 et 11 de la partie latérale gauche 8 s'étendent le long de la cuve 3. Le bras intérieur 11 est replié contre la cuve 3 et le bras extérieur 10 est replié contre le bras intérieur 11. Les bras 10 et 11 s'étendent sensiblement parallèlement au plan vertical médian du châssis 2. La partie latérale droite 9 est, quant à elle, représentée dans une position intermédiaire puisque le bras extérieur 10 n'a pas encore pivoté totalement contre le bras intérieur 11. Le bras intérieur 11 est déjà dans sa position de transport, il repose contre un dispositif de maintien 16. Le dispositif de maintien 16 comporte un relief configuré pour recevoir le bras intérieur 11. Le relief réalise un soutien dans la direction verticale de la demi-rampe. Le pivotement complet du bras intérieur 11 autour de l'axe 12a de l'articulation intérieure 12 a été effectué via l'actionneur intérieur 15. La position intermédiaire représentée illustre le bras extérieur 10 juste avant son repliage complet ou juste après le début de son déploiement. On peut également parler d'une phase initiale d'ouverture ou d'une phase finale de repliage. L'extrémité libre du bras extérieur 10 s'éloigne ou s'approche du bras intérieur 11 en pivotant autour de son axe d'articulation.

La figure 2 illustre de façon plus détaillée une partie de rampe 6 de pulvérisation. Il s'agit de la partie latérale droite 9 et plus précisément le bras extérieur 10 qui est en train de s'ouvrir par rapport au bras intérieur 11. Cette représentation pourrait aussi correspondre à la fermeture ou au repliage du bras extérieur 10. L'ouverture est plus conséquente que celle représentée sur la figure 1. Le bras extérieur 10 est solidaire du bras intérieur 11 par l'intermédiaire d'une articulation extérieure 17 d'axe 17a. Cette articulation extérieure 17 est composée d'une jonction inférieure 18 et d'une jonction supérieure 19. Le bras extérieur 10 peut être déployé et replié autour de l'axe 17a passant par les deux jonctions 18 et 19 par l'intermédiaire d'un actionneur extérieur 20. L'actionneur extérieur 20 s'étend entre le bras intérieur 11 et le bras extérieur 10 de la partie latérale respective 8, 9. Dans l'exemple de réalisation, le bras extérieur 10 est configuré pour autoriser un mouvement de pivotement vers l'avant autour de l'axe 17a. L'axe 17a de l'articulation extérieure 17 est légèrement incliné pour contrer la déformation en torsion de la rampe lors des phases d'ouverture ou de fermeture. D'une manière avantageuse, l'articulation extérieure 17 est composée par les deux jonctions 18, 19, chacune étant une articulation à rotule. Selon une alternative non représentée, la jonction inférieure est une articulation à rotule et la jonction supérieure est une bielle ou inversement. Selon une autre alternative, l'articulation extérieure 17 est composée par deux articulations pivot à axe vertical.

Les actionneurs intérieur ou extérieur 15, 20 sont des éléments d'actionnement du type vérins hydrauliques à double effet. Sur la figure 2, l'actionneur extérieur 20 est combiné à un système du type bielle pour permettre une ouverture de plus de 130° du bras extérieur 10 par rapport au bras intérieur 11. Le système pourra également être une association d'une bielle avec une contre bielle et/ou une crémaillère.

Depuis la configuration repliée de transport, les bras intérieur et extérieur 11 et 10 se déploient à l'aide des actionneurs 15 et 20 respectif pour arriver à la configuration de travail. On dit que la rampe est déployée ou ouverte. Dans la configuration de travail non représentée, le pulvérisateur est déplacé sur un champ comportant des plantes à traiter avec la rampe 6 de pulvérisation qui s'étend transversalement à la direction d'avancement A et de part et d'autre du plan vertical médian du châssis 2. Les deux parties latérales 8, 9 sont avantageusement symétriques. Les parties latérales gauche et droite 8, 9 sont alignées avec le cadre central 7. Le bras extérieur 10 et le bras intérieur 11, de chaque partie latérale 8, 9, s'étendent dans le prolongement l'un de l'autre et sont sensiblement alignés.

Dans le cas d'une rampe de très grande largeur, chaque partie latérale 8, 9 peut être subdivisée en plus de deux bras articulés. Il est courant que chaque partie latérale soit subdivisée en trois bras. Ainsi, un bras intermédiaire s'étend entre le bras intérieur 11 et le bras extérieur 10. Chaque bras est articulé l'un par rapport à l'autre et est apte à pivoter à l'aide d'un actionneur respectif. Une rampe subdivisée en quatre bras, donc plus de trois bras, fait également partie de l'invention.

La longueur de la rampe 6 au transport, dans la direction parallèle au châssis 2, est réduite puisque chaque partie latérale comporte plusieurs bras articulés 10, 11 qui se replient l'un sur l'autre grâce aux actionneurs 15, 20. La rampe 6 de pulvérisation s'étend à l'arrière du châssis 2 et est configurée pour permettre un repliage des parties latérales 8, 9 vers l'avant. La cinématique de la rampe 6 de pulvérisation, représentée sur les figures 1 et 2, est telle que lors du déploiement, le bras extérieur 10 pivote vers l'avant et le bras intérieur 11 pivote vers l'arrière. Les parties latérales 8, 9 passent d'une orientation parallèle au châssis 2 vers une orientation perpendiculaire au châssis 2. Lorsque le bras intérieur 11 est déployé, il s'étend dans le prolongement du cadre central 7 et le bras extérieur 10 s'étend dans l'alignement du bras intérieur 11.

La structure de la rampe 6, représentée sur les figures, est constituée d'un assemblage d'éléments allongés tel que des tubes. L'assemblage d'éléments allongés comprend un tube supérieur, deux tubes inférieurs et des éléments d'entretoisement qui relient les tubes entre eux. Généralement, les buses sont prévues à l'intérieur de la structure de rampe, elles sont fixées entre les tubes inférieurs et s'étendent entre les éléments d'entretoisement. D'une manière alternative, les buses s'étendent sous la rampe 6 de pulvérisation, c'est-à-dire sous sa structure de manière à apporter une flexibilité de montage plus importante quant à l'écartement entre les buses. Les buses sont pour cela disposées sous les éléments d'entretoisement. Le relief du dispositif de maintien 16 est configuré pour recevoir le tube supérieur du bras intérieur 11 dans la configuration de transport. Pour absorber les chocs ou oscillations lors du transport, le relief est recouvert ou prévu en caoutchouc ou similaire. Le relief peut être réalisé par une roulette.

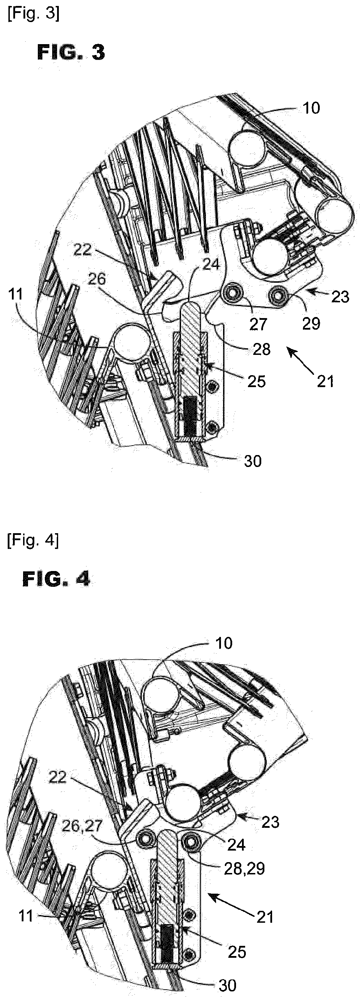

Pour éviter un déploiement par accident de la rampe 6 de pulvérisation dans la configuration de transport, la rampe 6 est maintenue dans sa position repliée ou fermée au moyen d'un dispositif de verrouillage 21. Ce dispositif permet à chaque bras extérieur 10 d'être maintenu en position sans aucun mouvement relatif avec le bras intérieur 11. A cet effet, le dispositif de verrouillage 21 comporte un support de rampe 22 et un étrier 23. Le support de rampe 22 est solidaire du bras intérieur 11 et l'étrier 23 est solidaire du bras extérieur 10. L'étrier 23 est configuré et apte à être logé dans le support de rampe 22 dans une position repliée du bras extérieur 10. Dans la phase finale de repliage représentée à la figure 3, l'étrier 23 se déplace par glissement et se verrouille avec le support de rampe 22 de manière à maintenir le bras extérieur 10 par rapport au bras intérieur 11. Le dispositif de verrouillage 21 est également muni d'un verrou 24. Il s'agit d'un verrou à ressort ou similaire. Ce verrou à ressort permet un état de fermeture automatique. Dans la réalisation représentée sur la figure 4, le verrou 24 est solidarisé sur le support de rampe 22 et permet de sécuriser l'étrier 23 dans le support de rampe 22.

L'invention concerne donc particulièrement une rampe 6 de pulvérisation repliable comportant un cadre central 7, des bras articulés 10, 11 et au moins un dispositif de verrouillage 21, chaque dispositif de verrouillage 21 permettant de maintenir l'un des bras 10, 11 par rapport à l'autre 11, 10 et comprenant un support de rampe 22, un étrier 23 et un verrou 24.

Selon une caractéristique importante de l'invention, chaque dispositif de verrouillage 21 comporte un élément d'ouverture 25 intégré pour neutraliser l'action du verrou 24. Grâce à cet élément d'ouverture 25, l'action nécessaire sur le verrou 24 pour autoriser le dépliage de la rampe 6 est réalisé directement au niveau du dispositif de verrouillage 21. L'action est localisée et directe au niveau du support de rampe 22. D'une manière avantageuse, l'action pour l'ouverture du verrou 24 se fait en parallèle de la commande d'ouverture de la rampe 6 et notamment en parallèle de la commande de l'actionneur extérieur 20. La commande de l'élément d'ouverture 25 est indépendante de la position des bras articulés 10, 11. Ce dispositif de verrouillage 21 est transposable à n'importe quelle cinématique de rampe disposant d'au moins deux bras articulés. Il n'est pas tributaire d'une cinématique particulière et s'adapte facilement à toutes rampes repliables.

Dans le cas d'une rampe de pulvérisation dont chaque partie latérale est subdivisée en trois voir plus de bras, le dispositif de verrouillage 21 permet de maintenir le bras extérieur 10, sans mouvement relatif, contre le bras intermédiaire ou le bras adjacent au bras extérieur 10. Le bras adjacent est celui situé directement en regard du bras extérieur 10 dans la position repliée. Une telle rampe avec au moins trois bras est constituée plus particulièrement d'un bras extérieur (10), d'au moins un bras intermédiaire et d'un bras intérieur (11).

D'une manière particulièrement avantageuse, l'élément d'ouverture 25 est configuré pour agir dans une direction sensiblement verticale, lorsque la rampe 6 de pulvérisation est dans sa configuration de transport. Avec une action verticale, le verrouillage n'est pas sensible aux défauts de désalignement entre les bras intérieur et extérieur 11 et 10.

D'une manière avantageuse, le verrou 24 est configuré pour réaliser un système de verrouillage positif non réversible. C'est-à-dire que le verrou 24 est apte à se fermer automatiquement et à conserver cet état jusqu'à ce que son ouverture soit commandée. Le déverrouillage du dispositif nécessite une action spécifique sur le verrou 24 alors que le verrouillage se fait de manière automatique lors du repliage de la rampe. Grâce au verrou 24, le bras extérieur 10 est maintenu dans sa position repliée contre le bras intérieur 11.

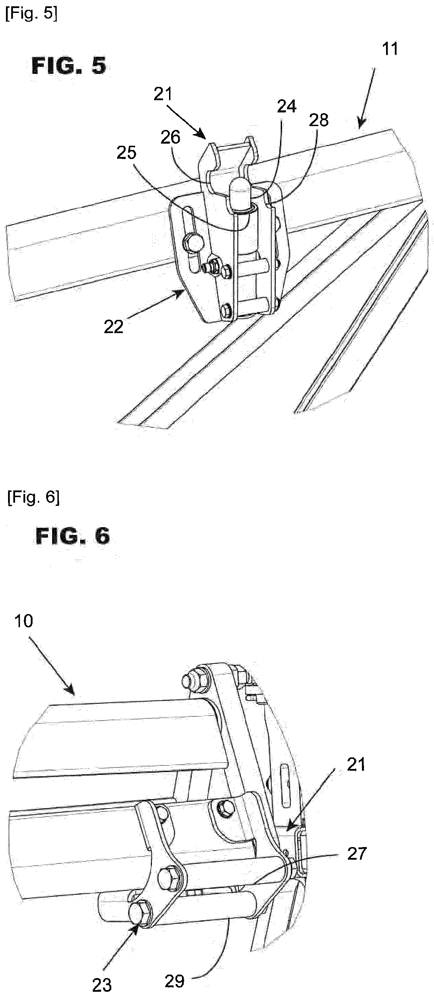

Dans l'exemple de réalisation représenté plus en détail aux figures 5 et 6, l'élément d'ouverture 25 est réalisé par un actionneur du type vérin à simple effet. L'élément d'ouverture 25 est prévu sur le support de rampe 22 et s'étend dans l'encombrement du support de rampe 22. L'action de l'élément d'ouverture 25 est directe et se fait avantageusement en parallèle de la commande d'ouverture de la rampe 6. Il s'agit d'une solution de verrouillage compacte et sans entretien.

Tel qu'illustré sur les figures 5 et 6, le support de rampe 22 comporte au moins un logement 26 apte et destiné à recevoir au moins une butée 27 prévu sur l'étrier 23. La butée 27 est susceptible d'être recouverte d'un matériau différent de celui du logement 26 pour éviter une usure prématurée du logement 26. La butée 27 est recouverte d'un matériau différent de l'acier, d'un matériau présentant une dureté moindre. De préférence, la butée 27 est recouverte d'une matière plastique. Le logement 26 et la butée 27 disposent d'une forme correspondante. La section du logement 26 et de la butée 27 est avantageusement circulaire. Le diamètre des butées 27, 29 est de préférence identique mais pourrait être différent. Le support de rampe 22 est réalisé par deux chapes munies d'au moins un logement 26, 28. L'élément d'ouverture 25 est solidaire du support de rampe 22 et est positionné entre les deux chapes. Les dimensions de l'élément d'ouverture 25 sont telles qu'elles s'inscrivent dans les dimensions du support de rampe 22. Le support de rampe 22 est encore équipé, sur sa partie supérieure, de surfaces pour guider la réception de la butée 27 dans son logement 26. Ces surfaces forment avantageusement un Vé de guidage ouvert vers l'extérieur dans la configuration de transport.

Dans la position verrouillée du dispositif de verrouillage tel que visible sur la figure 4, l'élément d'ouverture 25 est apte et destiné à bloquer ou maintenir la butée 27 dans son logement 26. Selon une réalisation préférée, le support de rampe 22 est munie d'un logement 26 et d'un logement secondaire 28, chacun est apte et est destiné à recevoir respectivement la butée 27 et la butée secondaire 29 prévue sur l'étrier 23. L'étrier 23 est composé de deux plaques verticales entre lesquelles sont fixées les butées 27, 29. L'utilisation d'un dispositif de verrouillage 21 avec deux butées 27 et 29 permet de maintenir le bras extérieur 10 verrouillé en torsion. L'étrier 23 est solidarisé sur le bras extérieur 10 à l'aide de vis de fixation. D'autres moyens de fixation par exemple via des rivets, par soudure ou par collage sont également possibles. Le support de rampe 22 est quant à lui solidarisé sur le bras intérieur 11 avec des vis. Sa position sur le bras intérieur 11 est réglable en hauteur grâce aux rainures verticales pour pouvoir le positionner par rapport à l'étrier 23. Tel que visible sur la figure 4, la butée 27 et la butée secondaire 29 sont positionnées sur l'étrier 23 de manière légèrement décalée en hauteur et latéralement. Les logements 26 et 28 sont également décalés en hauteur et latéralement l'un par rapport à l'autre. Le logement secondaire 28 est positionné de manière à ce que l'élément d'ouverture 25 s'étende entre les deux logements 26 et 28. La butée secondaire 29 est disposée sur l'étrier 23 de manière à ce que l'élément d'ouverture 25 s'étende et puisse s'insérer entre les deux butées 27 et 29. De préférence, l'extrémité de la tige du vérin ou de l'élément d'ouverture 25 est sphérique. Le diamètre des butées 27, 29 sont sensiblement identique.

Selon une réalisation avantageuse de l'invention, l'élément d'ouverture 25 est réalisé par un vérin simple effet. Il est monté en parallèle du circuit hydraulique de commande d'un des éléments d'actionnement pour le repliage et/ou le déploiement de la rampe 6. De préférence, l'élément d'ouverture 25 est branché en parallèle de l'actionneur extérieur 20 de la partie latérale correspondante. La chambre côté tige pour l'ouverture du verrou 24 est reliée à l'actionneur extérieur 20 . La chambre côté tige de l'élément d'ouverture 25 est avantageusement reliée à la grande chambre de l'actionneur extérieur 20. Ainsi lorsque l'ouverture ou le déploiement de la rampe 6 est commandé, le dispositif de verrouillage 21 est commandé automatiquement, il n'y a pas de dispositif spécifique à commander ou de position spécifique à respecter. A la fermeture de la rampe 6, l'élément d'ouverture 25 est momentanément poussé vers le bas pour libérer le passage de la butée 27 vers le logement 26. La forme sphérique de l'extrémité de la tige du vérin facilite ce mouvement de poussée vers le bas. C'est l'inertie de la rampe 6 lors de son repliage qui permet de vaincre l'effort du ressort 30 et permettre le verrouillage du bras extérieur 10. L'effort exercé par le ressort de rappel 30 étant plus fort que la pression de retour du vérin, la tige du vérin est repoussée vers le haut.

Dans l'exemple représenté à la figure 2, le support de rampe 22 est fixé sur le tube supérieur de la structure de rampe du bras intérieur 11 et l'étrier 23 est fixé sur le tube inférieur de la structure de rampe du bras extérieur 10, plus précisément le tube inférieur le plus proche du tube supérieur du bras intérieur 11 en position repliée.

Il va de soi que la présente invention concerne également les pulvérisateurs de type portés ainsi que des pulvérisateurs automoteurs. Cette rampe 6 de pulvérisation peut se monter à l'avant ou à l'arrière d'un tracteur agricole, ou dans une autre configuration la rampe 6 peut être intégrée à une machine spécifique automotrice.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Rampe (6) de pulvérisation repliable comportant un cadre
central (7), deux parties latérales (8, 9) comprenant respectivement
un bras extérieur (10) et un bras adjacent, qui sont des bras articulés, et qui dans la position de travail s'étendent dans le prolongement
l'un de l'autre et sont sensiblement alignés transversalement à la direction d'avancement (A), le
bras adjacent étant celui situé directement en regard du bras extérieur (10) dans la position repliée et au moins un dispositif de verrouillage (21), chaque dispositif de verrouillage (21) permettant de maintenir le bras extérieur (10), sans mouvement relatif, contre le bras adjacent, et comprenant un support de rampe (22), un étrier (23) et un verrou (24), chaque dispositif de verrouillage (21) comporte un élément d'ouverture (25) intégré pour neutraliser l'action du verrou (24) **caractérisée en ce que** l'élément d'ouverture (25) est configuré pour agir dans une direction verticale.

2. Rampe de pulvérisation selon la revendication 1, **caractérisée en ce que** l'élément d'ouverture (25) est prévu sur le support de rampe (22) et s'étend dans l'encombrement du support de rampe (22).

3. Rampe de pulvérisation selon la revendication 1 ou 2, **caractérisée en ce que** le support de rampe (22) est munie d'au moins un logement (26) apte et destiné à recevoir au moins une butée (27), recouvert d'une matière différente de celle du logement (26), prévu sur l'étrier (23).

4. Rampe de pulvérisation selon la revendication 3, **caractérisée en ce que** l'élément d'ouverture (25) est apte et destiné à bloquer la butée (27) dans le logement (26).

5. Rampe de pulvérisation selon l'une quelconque des revendications 1 à 4, **caractérisée en ce que** l'élément d'ouverture (25) est réalisé par un actionneur du type vérin à simple effet.

6. Rampe de pulvérisation selon la revendication 5, **caractérisée en ce que** la chambre côté tige de l'élément d'ouverture (25) est reliée à un actionneur extérieur (20) disposé entre le bras extérieur (10) et le bras adjacent.

7. Rampe de pulvérisation selon la revendication 3, **caractérisée en ce que** le support de rampe (22) est munie du logement (26) et d'un logement secondaire (28), chacun est apte et est destiné à recevoir respectivement la butée (27) et une butée secondaire (29) prévues sur l'étrier (23).

8. Rampe de pulvérisation selon la revendication 7, **caractérisée en ce que** le logement secondaire (28) est positionné de manière à ce que le moyen d'ouverture (25) s'étende entre les deux logements (26, 28).

9. Rampe de pulvérisation selon l'une quelconque des revendications 1 à 8, **caractérisée en ce que** l'étrier (23) est solidaire du bras extérieur (10) et que le support de rampe (22) est fixé sur le bras adjacent au bras extérieur (10).

10. Rampe de pulvérisation selon l'une quelconque des revendications 1 à 9, **caractérisée en ce que** la rampe comporte au moins trois bras, particulièrement le bras extérieur (10), au moins un bras intermédiaire étant le bras adjacent, et un bras intérieur (11).

11. Machine agricole comportant une rampe de pulvérisation selon l'une quelconque des revendications 1 à 10.

## Patentansprüche

1. Klappbare Spritzgestänge (6) mit einem Mittelrahmen (7), zwei Seitenteile (8, 9), die jeweils einen Außenarm (10) und einen angrenzenden Arm umfassen, bei denen es sich um Gelenkarme handelt, die sich in der Arbeitsposition in Verlängerung zueinander erstrecken und im Wesentlichen quer zur Vorschubrichtung (A) ausgerichtet sind, wobei der angrenzende Arm derjenige ist, der in der eingeklappten Position direkt gegenüber dem Außenarm (10) liegt, sowie mindestens eine Verriegelungsvorrichtung (21), wobei jede Verriegelungsvorrichtung (21) es ermöglicht, den Außenarm (10) ohne Relativbewegung am angrenzenden Arm zu halten, und mit einem Gestängehalter (22), einen Bügel (23) und einen Riegel (24), wobei jede Verriegelungsvorrichtung (21) ein integriertes Öffnungselement (25) aufweist, um die Wirkung des Riegels (24) aufzuheben, **dadurch gekennzeichnet, dass** das Öffnungselement (25) so ausgebildet ist, dass es in vertikaler Richtung wirkt.

2. Spritzgestänge nach Anspruch 1, **dadurch gekennzeichnet, dass** das Öffnungselement (25) am Gestängehalter (22) vorgesehen ist und sich innerhalb des Platzbedarfs des Gestängehalters (22) erstreckt.

3. Spritzgestänge nach Anspruch 1 oder 2, **dadurch gekennzeichnet, dass** der Gestängehalter (22) mit mindestens einer Aufnahme (26) versehen ist, die zur Aufnahme mindestens eines Anschlags (27) geeignet und bestimmt ist, der mit einem anderen Material als dem der Aufnahme (26) beschichtet ist und am Bügel (23) vorgesehen ist.

4. Spritzgestänge nach Anspruch 3, **dadurch gekennzeichnet, dass** das Öffnungselement (25) dazu geeignet und bestimmt ist, den Anschlag (27) in der Aufnahme (26) zu blockieren.

5. Spritzgestänge nach einem der Ansprüche 1 bis 4, **dadurch gekennzeichnet, dass** das Öffnungselement (25) durch einen einfachwirkenden Zylinder als Stellantrieb ausgebildet ist.

6. Spritzgestänge nach Anspruch 5, **dadurch gekennzeichnet, dass** die stangenseitige Kammer des Öffnungselements (25) mit einem äußeren Stellantrieb (20) verbunden ist, der zwischen dem äußeren Arm (10) und dem angrenzenden Arm angeordnet ist.

7. Spritzgestänge nach Anspruch 3, **dadurch gekennzeichnet, dass** der Gestängehalter (22) mit einer Aufnahme (26) und einer sekundären Aufnahme (28) versehen ist, die jeweils dazu geeignet und bestimmt sind, den am Bügel (23) vorgesehenen Anschlag (27) bzw. einen sekundären Anschlag (29) aufzunehmen.

8. Spritzgestänge nach Anspruch 7, **dadurch gekennzeichnet, dass** die sekundäre Aufnahme (28) so positioniert ist, dass sich das Öffnungselement (25) zwischen den beiden Aufnahmen (26, 28) erstreckt.

9. Spritzgestänge nach einem der Ansprüche 1 bis 8, **dadurch gekennzeichnet, dass** der Bügel (23) fest mit dem äußeren Arm (10) verbunden ist und dass der Gestängehalter (22) an dem an den äußeren Arm (10) angrenzenden Arm befestigt ist.

10. Spritzgestänge nach einem der Ansprüche 1 bis 9, **dadurch gekennzeichnet, dass** das Spritzgestänge mindestens drei Arme aufweist, insbesondere den äußeren Arm (10), mindestens ein mittlerer Arm der angrenzende Arm ist, und einen inneren Arm (11).

11. Landwirtschaftliche Maschine mit einem Spritzgestänge nach einem der Ansprüche 1 bis 10.

## Claims

1. Foldable spray boom (6) comprising a central frame (7), two side sections (8, 9) comprising, respectively, an outer arm (10) and an adjacent arm, which are articulated arms and which, in the working position, extend in line with one another and are substantially aligned transversely to the forward direction (A), the adjacent arm being the one situated directly opposite the outer arm (10) in the folded position, and at least one locking device (21), each locking device (21) serving to hold the outer arm (10) against the adjacent arm without relative movement, and comprising a boom support (22), a bracket (23) and a latch (24), each locking device (21) comprising an integrated release element (25) for disengaging the latch (24), **characterised in that** the release element (25) is configured to act in a vertical direction.

2. Spray boom according to claim 1, **characterised in that** the release element (25) is provided on the boom support (22) and extends within the overall dimensions of the boom support (22).

3. Spray boom according to claim 1 or 2, **characterised in that** the boom support (22) is fitted with at least one recess (26) suitable for and intended to receive at least one stop (27), which is covered with a material different from that of the recess (26), provided on the bracket (23).

4. Spray boom according to claim 3, **characterised in that** the release element (25) is adapted and intended to lock the stop (27) in the recess (26).

5. Spray boom according to any one of claims 1 to 4, **characterised in that** the release element (25) is formed by a single-acting cylinder-type actuator.

6. Spray boom according to claim 5, **characterised in that** the rod-side chamber of the release element (25) is connected to an external actuator (20) arranged between the outer arm (10) and the adjacent arm.

7. Spray boom according to claim 3, **characterised in that** the boom support (22) is provided with a recess (26) and a secondary recess (28), each of which is adapted to and intended to receive, respectively, the stop (27) and a secondary stop (29) provided on the bracket (23).

8. Spray boom according to claim 7, **characterised in that** the secondary recess (28) is positioned such that the opening release (25) extends between the two recesses (26, 28).

9. Spray boom according to any one of claims 1 to 8, **characterised in that** the bracket (23) is integral with the outer arm (10) and the boom support (22) is secured to the arm adjacent to the outer arm (10).

10. Spray boom according to any one of claims 1 to 9, **characterised in that** the boom comprises at least three arms, in particular the outer arm (10), at least one intermediate arm being the adjacent arm, and an inner arm (11).

11. Agricultural machine comprising a spray boom according to any one of claims 1 to 10.
